# EUROPEAN PATENT SPECIFICATION

(11) **EP 2 690 126 B1**
(45) Date of publication and mention of the grant of the patent: **12.10.2016**
(21) Application number: 12189362.2
(22) Date of filing: 19.10.2012
(51) Int. Cl.: C08G 77/56, C09D 183/14, C09J 183/14

(54) **Method for producing a non-Newtonian fluid in particular for impact protection, Method for producing an impact protection by means of a non-Newtonian fluid, Impact protection by means of a non-Newtonian fluid, and Object with such impact protection**
Verfahren zur Herstellung einer nicht-newtonsche Flüssigkeit, insbesondere zum Aufprallschutz, Verfahren zur Herstellung eines Aufprallschutzes mithilfe einer nicht-newtonschen Flüssigkeit, Aufprallschutz mithilfe einer nicht-newtonschen Flüssigkeit und Objekt mit solch einem Aufprallschutz
Procédé de production d'un fluide non newtonien notamment pour protection contre les chocs, procédé de production d'une protection contre les chocs au moyen d'un fluide non newtonien, protection contre les chocs au moyen d'un fluide non newtonien et objet avec une telle protection contre les chocs

(30) Priority: 24.07.2012 DE 102012106680
(43) Date of publication of application: 29.01.2014
(73) Proprietor: Impact Protection Technology AG, 8001 Zürich (CH)
(72) Inventor: Bünger, Daniel, 52072 Aachen (DE); Zografou, Iason, 52064 Aachen (DE)
(74) Representative: Boult Wade Tennant

(56) References cited:
- WO-A2-03/055339
- DE-A1- 2 743 843
- DE-A1- 3 009 948
- DE-A1- 19 904 510
- GB-A- 2 349 798
- US-A- 5 310 563
- Anonymous: "Dilatant - Wikipedia, the free encyclopedia", , 16 December 2013 (2013-12-16), XP055093596, Retrieved from the Internet: URL:http://en.wikipedia.org/wiki/Dilatant [retrieved on 2013-12-16]
- "Cambridge Polymer Group, INC. Consultation, Testing, and Instrumentation for Polymeric Materials PDMS 65% Silica 17% Thixotrol 9% Boric Acid 4% Glycerine 1% Titanium Dioxide 1% Dimethyl Cyclosiloxane 1%", , 15 December 2013 (2013-12-15), XP055093673, Retrieved from the Internet: URL:http://www-old.me.gatech.edu/jonathan. colton/me4210/sillyputty.pdf [retrieved on 2013-12-16]
- Anonymous: "Synthesis of Silicone Bouncing Putty", , 16 December 2013 (2013-12-16), pages 1-8, XP055093706, Retrieved from the Internet: URL:http://www.wou.edu/las/physci/ch462/Bo uncingPutty.htm [retrieved on 2013-12-16]
- ANONYMOUS: 'Silly Putty - Wikipedia, the free encyclopedia', [Online] 05 June 2014, pages 1 - 4, XP055136627 Retrieved from the Internet: <URL:http://en.wikipedia.org/wiki/Silly_Put ty> [retrieved on 2014-08-26]

## Description

### TECHNICAL FIELD OF THE INVENTION

The invention relates to a method for producing a non-Newtonian fluid in particular for impact protection, a method for producing an impact protection by means of a non-Newtonian fluid, an impact protection by means of a non-Newtonian fluid and an object with such impact protection.

### BACKGROUND OF THE INVENTION

Known from US 5599290 A and GB 2349798 A are polymer shells for protecting objects from impacts, in which a non-Newtonian fluid is used in each case.

US 2541851 A, to which reference is made in its full scope for the disclosure of non-Newtonian materials and their properties, teaches non-Newtonian fluid compositions. Corresponding products based on polyborosiloxanes are known from Dow Corning Corp., Midland, USA under the trade name "3179" and the Crayola LLC, Easton, Pennsylvania, USA, under the trade name "Silly Putty". The latter is a plasticine also designated as "intelligent plasticine" or "bouncing putty". US 2002/0187859 A1, JP-H07-216138 and WO 2005/000966 A1 disclose mixtures of such materials and elastomers in applications for absorbing impacts. Non-Newtonian fluids such as bouncing putty are difficult to process on account of their viscosity properties and are therefore usually processed into shells or extruded or kneaded plastic mixtures to form products.

WO 2005/000966 A1 discloses moulding material comprising mixtures of bouncing putty and elastomers which are produced by mixing, in particular kneading of bouncing putty and molten elastomer at high temperature and subsequent extrusion.

US 6548177 B2 discloses a combination of two elastomer layers having different shear moduli, which are provided between a shatter protection layer and an adhesive layer and which can be applied to a glass display surface by means of the adhesive layer. In order to produce this combination, for example, a film serving as a shatter protection layer is coated with a pressure-sensitive film on which a fracture-protective film is laminated which in turn is coated with a pressure-sensitive adhesive.

### DISCLOSURE OF THE INVENTION

It is the object of the invention to provide a method that significantly improves the handling ability of the non-Newtonian fluid so that various advantageous applications of the non-Newtonian fluid are possible. For example, the method according to the invention should enable impact protection to be formed, which is improved at least under the following aspects:
- high impact resistance,
- small layer thickness,
- low manufacturing costs,
- possible optical transparency,
- homogeneity and
- touch sensitivity.

Here the term "impact protection" is understood to be a material layer, e.g. in the form of a layer or a layer introduced into a shell, which serves to protect any objects, layers, body parts etc. located thereunder from damage or injuries by impacts. The invention also relates to applications of the method e.g. for the manufacture of impact protection as well as impact protection and an object provided with impact protection.

The said object is solved by a method in which at least one starting material that can be cross-linked to form a non-Newtonian fluid and a cross-linking agent dissolved in a polymer are provided, wherein the solvent has an inhibiting effect on the cross-linking of the starting material, these components are mixed and the solvent is removed from the mixture so that the cross-linking agent is released and the starting material is cross-linked by means of the cross-linking agent.

Advantageously the viscosity of the mixture can be adjusted by means of the solvent for easy processing, in particular easy and homogeneous application of the mixture to, for example, a plastic film. To this end, the mixture can comprise suitable viscosity modifiers. Suitable methods can be used for application such as, for example, doctor coating, roll coating or casting.

According to the invention, the starting material is a non-cross-linked or partially cross-linked polymer. The term polymer comprises homopolymers, copolymers and mixtures thereof. The crosslinking of such polymer to form the non-Newtonian fluid is only carried out after application of the mixture to, for example, a plastic film and the crosslinking is started by removing (e.g. evaporating) of at least a part of the solvent and thus releasing the cross-linking agent in the mixture. This can take place at room temperature, but heat and/or negative pressure can also be used.

The invention enables a defined synthesis of an impact-energy-absorbing polymeric material with a non-Newtonian fluid in which impact-energy-absorbing properties adapted to the particular application can be adjusted. For adjusting these properties, in particular
- the degree of cross-linking of the partially cross-linked polymer to form a non-Newtonian fluid and/or its chain length,
- the chain length of the non-cross-linked polymer to form a non-Newtonian fluid,
- the concentration of the non-cross-linked or partially cross-linked polymer to form a non-Newtonian fluid in the solvent,
- the composition of the non-cross-linked or partially cross-linked polymer from various non-cross-linked or partially cross-linked polymers,
- the concentration of the cross-linking agent,
- an addition of fillers and/or
- the creation of interpenetrating network structures

can be suitably selected. Also a plurality of layers of the material can be combined with respectively different impact-energy-absorbing properties.

The invention makes it possible to produce impact protection which can be adjusted to individual requirements. It is thus possible to adapt the absorption maximum of the impact energy according to the particular requirement and to optimize the impact protection for different properties such as, for example, impact resistance, small layer thickness, optical transparency, low manufacturing costs, homogeneity and touch sensitivity. Thus, for example, it is possible to produce impact protection with a minimal thickness and optimal impact energy absorption properties for a mobile telephone according to the specific weight of the device and a typical drop height of, for example, about 80-100 cm, or impact protection which is optimized for larger weights and drop heights, e.g. for electronic measurement equipment used by craftsmen. It is also possible to produce impact protection with several layers/plies each of different or the same impact protection properties in order to thus create impact protection optimised to different cases of application, e.g. a plurality of different drop heights.

In particular non-cross-linked and/or partially cross-linked polyorganosiloxanes are suitable for optimal adjustment of the impact energy absorption properties. In the method according to the invention, polyorganosiloxanes can also be adjusted to a corresponding molecular weight before and/or after a (partial) cross-linking by forming a specific chain length in order to ensure an impact energy dependent absorption maximum required in a product. The synthesis of the non-cross-linked polyorganosiloxanes can, for example, be accomplished by means of methods known from the literature such as, for example condensation reaction of linear oligomers, for example with acid catalysis, or anionic or cationic initiated ring opening polymerisation of cyclic siloxanes.

The properties and/or impact absorption regions for impact reactions of the impact protection can be adjusted in a required and defined manner by mixing polyorganosiloxanes of different molecular weight and/or with different organic side groups.

The non-Newtonian material properties can additionally be optimised in different ways, for example by adding additives such as stearic compounds, for example stearic acid, or aluminium stearate, and/or mechanically, for example by repeatedly pressurising the cross-linked polymer in a manner known per se. The pressurisation can be accomplished by rolling, milling, pressing, kneading and also, in a noncontact manner, by ultrasound.

The invention advantageously uses non-Newtonian fluids which can be obtained by cross-linking polyorganosiloxanes having molecular weights between 92 and 150,000 g/mol, for example, between 700 and 55,000 g/mol, where a boron compound such as, for example, boric acid, is used as a cross-linking agent for the cross-linking. By means of a suitable choice of molecular weight or chain length in this range, impact reactions of the impact protectors can be adjusted in the manner required by the user.

The invention enables a very much thinner impact protection layer compared with the prior art to be formed using a non-Newtonian fluid on a substrate. In general, any solid product surface can be used as a substrate. The substrate can advantageously comprise a plastic film which can adhere to most diverse surfaces so that an improved impact protection can easily be provided for different products. It is then preferable to proceed such that the impact protection is inserted in a film shell or after applying the impact protection to a film, a second film is laid on the impact protection layer and is connected, e.g. welded to the first film in the edge zone to form a film shell. If a film shell is provided, impact protection having a low viscosity can be used.

The film shell formed by welding two films or in another suitable manner can be very thin in the finished state. Such a shell can be coated on one side with an adhesive layer so that the resulting impact protective film can easily be applied by a user onto an object to be protected, e.g. to a contact-sensitive screen of a smartphone.

The layer of non-Newtonian fluid can advantageously be configured to be very thin and typically has a thickness between 20 µm and 500 µm, in particular between 5 µm and 200 µm. If one film is provided, this preferably has a thickness between 50 µm and 1 mm, preferably between 100 µm and 500 µm, further preferably between 150 µm and 300 µm.

The impact protection and one or more optionally provided films can be configured to be transparent so that a surface provided therewith can be translucent. This is suitable in particular for applications in touch-sensitive screens.

The impact protection of the present invention can also be configured to be non-transparent and/or coloured by adding fillers such as, for example, titanium oxide or silicon oxide, to the non-Newtonian fluid. By means of such fillers, the impact resistance properties can be further optimised and the absorption maximum of the impact protection can be increased. Such coloured and/or non-transparent impact protections are suitable for surfaces which do not need to be translucent such as, for example, the rear side of a mobile telephone. It is also possible to produce a combined impact protection which has a transparent region for example for the touch-sensitive screen and a non-transparent and/or coloured region for example for the frame of the screen.

Applications of the impact protection for protection of humans and animals in sport, leisure and professionally are also possible, e.g. in protective vests, in protectors or in protective glazings.

The impact protection according to the invention can also be formed as an adhesive formulation. Adhesives which harden by pressure, temperature, light and/or drying can be used to produce the adhesive formulation. In particular, it is possible to use such adhesives which harden by drying which also harden when solvent is extracted according to the invention. In this way, an impact protection can be applied rapidly and cost-effectively to a substrate.

If the impact protection is to be present as adhesive formulation, the non-cross-linked or partially cross-linked polymer which can be cross-linked to form a non-Newtonian fluid can at least partially have a functionalisation, in particular a vinyl group, which enables it to form a covalent bond with an organic unsaturated adhesive component. It is thereby possible to influence the adhesive properties in addition to the impact absorption properties by appropriate modifications.

Introduction of vinyl substituents into the non-cross-linked or partially cross-linked polymer into the polymer chain thereof can be achieved, for example, by means of an equilibration reaction, or a ring opening polymerisation from the following monomers:

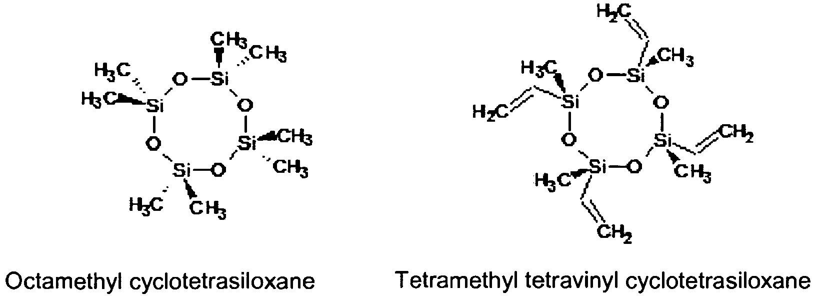

Preferably a linear alpha, omega-hydroxy-terminated polydimethyl siloxane which can be obtained by the ring opening polymerisation shown above, having a molecular weight between at least 222 and 150,000 g/mol, for example, 20,000-30,000 g/mol, is used. More preferably the molar ratio of the monomers octamethyl cyclotetrasiloxane to tetramethyl tetravinyl cyclotetrasiloxane lies in the range between 5 and 50, in particular between 10 and 20.

In order to produce the impact-energy-absorbing adhesive formulation the non-cross-linked and/or partially cross-linked polymer can, for example, have terminal dimethylsiloxy, hydroxy and/or vinyl groups, where the functional groups form the adhesive domains of the fluid adhesive formulation.

The mixture according to the invention for producing the impact protection comprising a non-Newtonian polymer can also be formed by addition of an adhesive composition disclosed in EP 0 688 847 B1 having vinyl groups and organometal catalysts as adhesive having an unsaturated adhesive component.

The fluid used can be stabilised by forming co-polymers by means of reaction of double bonds or other suitable active chemical groups between the unsaturated organic adhesive component and the functional group of the non-cross-linked or partially cross-linked polymer such that the resulting material retains its impact-energy absorbing properties but no longer flows under the action of gravity. The resulting adhesive formulation can then be dimensionally stabilised depending on the composition, e.g. by pressure, temperature, light and/or drying. A copolymer which cures in these ways can be used such that it is also dimensionally stabilised in the process step of evaporation of the solvent according to the invention in which the cross-linking agent is dissolved.

The non-Newtonian fluid produced according to the invention, formulated as adhesive, having impact energy absorption potential can thus be applied very rapidly and cost-effectively to a substrate and serve to adhesively bond various layers of an impact-energy-absorbing material.

The invention is particularly suitable for protecting touch-sensitive screens, for example, of smartphones and tablet PCs since the impact protection according to the invention can be manufactured to be transparent, have small thickness and chemical surface inertness. The transmittance of the impact protection or an impact protective film formed thereby can be adjusted so that for visible light it lies in the range of 70% or more.

A vacuum lamination can advantageously be used for extracting the solvent and laminating films to form impact protection in the method according to the invention. However, volatile solvents or very small solvent fractions can be used which allow operation at atmospheric pressure without vacuum.

According to the invention, the solvent is the carrier of the cross-linking agent and is used to adjust the viscosity and to inhibit cross-linking reactions before extracting the solvent. By this means it is possible to provide a system or a composition with which cross-linking can be started at a defined time (specifically during extraction of the solvent) and under defined conditions. The invention therefore provides a "chemical switch" in a method for applying impact protective layers. To this end, in particular a boron compound, in particular boric acid can be used as a cross-linking agent, a volatile solvent such as, for example, ethanol or methanol and polyorganosiloxane can be used to form a non-Newtonian fluid. Since the boron compound has a higher affinity to the solvent, that is for example to ethanol or methanol, than to polyorganosiloxanes, an instantaneous cross-linking of the polyorganosiloxanes by the boron compounds only occurs after extracting the solvent. Furthermore, a solvent can be used in order to positively influence the surface roughness in the coating process, e.g. for a very smooth and/or very homogeneous coating.

Further, as ethanol and water form an azeotropic mixture, in the moment ethanol is removed also water will be removed from the reaction system. Thus, the equilibrium of the following condensation reaction (exemplary a condensation reaction of polydimethylsiloxane and boric acid is shown) is shifted into the direction of the desired product, i.e. non-Newtonian fluid consisting of boron cross-linked polyorganosiloxane:

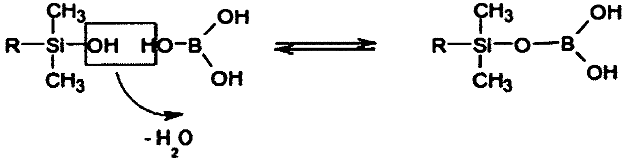

Known techniques such as roll to roll coating, spray coating etc. can be used to apply the fluid mixture to a substrate such as a film, for example, before extracting the solvent.

Further details and advantages of the invention are obtained from the following, purely exemplary and non-restrictive description of exemplary embodiment of the invention in conjunction with the drawings.

### BRIEF DESCRIPTION OF THE FIGURES

- Fig. 1: shows highly schematically an impact protective layer according to the invention in a film shell and
- Fig. 2: shows highly schematically an impact protective layer applied to an object to be protected.

### DESCRIPTION OF PREFERRED EMBODIMENTS

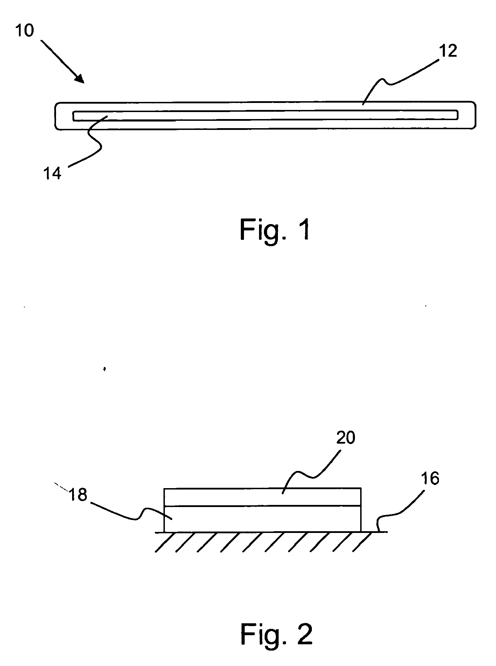

Figure 1 shows highly schematically and not to scale an impact protection designated in its entirety by 10, in which a non-Newtonian transparent fluid 14 is enclosed in a transparent film shell 12. The layer of non-Newtonian fluid 14 here typically has a thickness between 5 µm and 500 µm and the impact protection overall has a thickness between 50 µm and 1 mm.

In one example the impact protection was formed from alpha-omega hydroxyterminated polydimethyl siloxane having molecular weights between 20,000-30,000 g/mol and an average molecular weight of 25,000 g/mol by cross-linking with boric acid in a region on a first optical, 100 µm thick, transparent PET film as substrate. A second identical film was applied to the layer of non-Newtonian fluid and welded in the edge zone with the first film. Then a corresponding shape was stamped out from the film shell thus formed with the included non-Newtonian fluid and welded in the edge zone. The film shell thus formed can be provided with an adhesive layer on one side in order to produce a self-adhesive impact protective film which can be glued, for example, onto screen glass substrates such as contact-sensitive screens. Another film or another layer can be applied to the film shell, which forms a scratch-resistant layer and which forms the outermost side facing a user of the object when the film is mounted as intended on a surface to be protected.

Figure 2 shows highly schematically and not to scale a cross-section through an impact protective layer 18 applied to an object 16 to be protected, where the layer 18 consists of adhesive (cured in the state shown) and the material of the impact protection described in connection with Fig. 1. The layer 18 is applied to a scratch-resistant self-healing film 20 whilst extracting solvent. The adhesive force and the surface energy of the impact-absorbing dimensionally stable adhesive formulation (layer 18) were adjusted so that this exhibits a so-called "one-touch effect" so that after placing on a surface to be protected and gently pressing, the impact protective film is pulled over the surface to be protected. It should also be noted that instead of one impact protective layer 18, several of such layers each of different or the same impact protection properties may be foreseen and layered on top of each in order to to create an impact protection optimised to different cases of application, e.g. a plurality of different drop heights.

### Example

The following polydimethylsiloxane (silanol) was obtained from ABCR Dr. Braunagel GmbH & Co. KG, D-76187 Karlsruhe:

| Silanol | Molecular weight (g/mol) | Viscosity (cSt) |
|---|---|---|
| DMS-S31 | 20000-30000 | 800-1200 |

Boric acid (99.5% pure from Merck) was dissolved in ethanol and mixed with silanol. The formulation was produced with the following quantities:

| Silanol | | | Boric acid | |
|---|---|---|---|---|
| | g | mmol | g | mmol |
| DMS-S31 | 5 | 0.200 | 0.020 | 0.326 |

The formulation is heated to 85°C whilst agitating. After 5 minutes, the stirring process is interrupted and the formulation is applied thinly to a glass object slide.

The object slide is left to stand for 30 min at 85°C and then for two hours at 150°C in order to obtain transparent films on the object carriers.

Within the scope of the inventive idea, numerous modifications and further developments are possible which relate, for example, to the specific physically objective embodiment of the impact protection and the number and shape of the impact protective layers and impact protective elements used, e.g. using a shell filled with a non-Newtonian fluid produced according to the invention.

## Claims

1. Method for producing a non-Newtonian fluid in particular for impact protection, comprising:
providing at least one non-cross-linked or partially cross-linked polyorganosiloxane as starting material that can be cross-linked to form the non-Newtonian fluid,
providing ethanol or methanol as solvent in which a boron compound as cross-linking agent for cross-linking the starting material is dissolved, wherein the solvent has an inhibiting effect on the cross-linking of the starting material,
mixing the starting material and the solvent, in which the cross-linking agent is dissolved, and
removing the solvent from the mixture and thus releasing the cross-linking agent in the mixture and cross-linking of the starting material by means of the cross-linking agent to form the non-Newtonian fluid.

2. The method according to claim 1, **characterised in that** the starting material is a polydimethylsiloxane.

3. The method according to any one of claims 1 to 2, **characterised in that** the cross-linking agent is boric acid.

4. The method according to any one of claims 1 to 3, **characterised in that** the properties of the non-Newtonian fluid are adjusted by adjusting the molecular weight of the starting material before or after extracting the solvent and/or by adjusting the degree of cross-linking.

5. The method according to any one of claims 1 to 4, **characterised in that** the properties of the non-Newtonian fluid are varied by exposure to pressure, in particular repeated exposure to pressure, and/or by adding additives such as stearic compounds, for example stearic acid, or aluminium stearate.

6. Method for producing impact protection **characterised in that** at least one material protective layer is formed by using a non-Newtonian fluid produced according to any one of claims 1 to 5.

7. The method according to claim 6, wherein the starting material that can be cross-linked to form the non-Newtonian fluid comprises at least in part, a functionalisation, in particular one or more vinyl group(s), **characterised in that** the starting material is introduced into an adhesive by means of this functionalisation.

8. The method according to claim 7, **characterised in that** the adhesive containing the non Newtontan fluid is applied to a scratch-resistant layeer which is self-healing and/or in particular is present in the form of a scratch-resistant film or in the form of an initially liquid and then curing scratch-resistant layer.

9. The method according to claim 8, **characterised in that** the non-Newtonian fluid is introduced into a plastic shell.

10. The method according to claim 9, **characterised in that** the introduction into the plastic shell comprises:
applying a layer of the mixture of starting material, solvent and cross-linking agent to a first plastic film,
applying a second plastic film to the layer before or after the extraction of the solvent from the mixture and
closing, in particular welding, the two plastic films.

11. Adhesive formulation, which contains a non-Newtonian fluid produced according to any one of claims 1 to 5, **characterised in that** the starting material that can be cross-linked to form the non-Newtonian fluid comprises at least in part, as functionalisation, one or more vinyl group/s, and is introduced into an adhesive formulation by means of this functionalisation.

12. Material layer (10) suitable for protecting any objects or layers or body parts located thereunder from damage or injuries by impacts (impact protection), in particular for touch-sensitive screens, protective vests, protective glazings and the like, comprising an adhesive formulation according to claim 11.

13. Material layer (10) according to claim 12, **characterised in that** it comprises a plastic shell (12), into which the non-Newtonian fluid (14) is introduced.

14. Material layer (10) according to claim 12 or 13, **characterised in that** the impact protection has a thickness in the range of 50 µm to 1 mm, in particular of 100 µm to 500 µm, preferably of 150 µm to 300 µm.

15. Material layer according to any one of claims 12 to 14, wherein the impact protection comprises a scratch-resistant layer (20) on the side facing away from the object (16) to be protected when mounted as prescribed, which is preferably self-healing and/or an adhesive layer on the side facing the object (16) to be protected when mounted as prescribed, in particular a layer of a pressure-sensitive adhesive, wherein the adhesive layer preferably shows a one-touch effect.

16. Material layer according to any one of claims 12 to 15, **characterised in that** it comprises several impact protective layers made of non-Newtonian fluid, each of such layers having different or the same impact protection properties.

17. Object having at least one material layer according to any one of claims 12 to 16.

## Patentansprüche

1. Verfahren zur Herstellung eines nicht-newtonschen Fluids, insbesondere für Aufprallschutz, umfassend:
Bereitstellen von mindestens einem nicht-quervernetzten oder teilweise quervernetzten Polyorganosiloxan als Ausgangsmaterial, das quervernetzt werden kann, um das nicht-newtonsche Fluid zu bilden,
Bereitstellen von Ethanol oder Methanol als Lösungsmittel, in dem eine Borverbindung als Quervernetzungsmittel zum Quervernetzen des Ausgangsmaterials gelöst ist, wobei das Lösungsmittel eine inhibierende Wirkung auf das Quervernetzen des Ausgangsmaterials aufweist,
Mischen des Ausgangsmaterials und des Lösungsmittels, in dem das Quervernetzungsmittel gelöst ist, und
Entfernen des Lösungsmittels von der Mischung und somit Freisetzen des Quervernetzungsmittels in die Mischung und Quervernetzen des Ausgangsmaterials mittels dem Quervernetzungsmittel, um das nicht-newtonsche Fluid zu bilden.

2. Verfahren nach Anspruch 1, **dadurch gekennzeichnet, dass** das Ausgangsmaterial ein Polydimethylsiloxan ist.

3. Verfahren nach einem der Ansprüche 1 bis 2, **dadurch gekennzeichnet, dass** das Querernetzungsmittel Borsäure ist.

4. Verfahren nach einem der Ansprüche 1 bis 3, **dadurch gekennzeichnet, dass** die Eigenschaften des nicht-newtonschen Fluids eingestellt werden, durch Einstellen des Molekulargewichts des Ausgangsmaterials vor oder nach der Extraktion des Lösungsmittels und/oder durch Einstellen des Grads der Quervernetzung.

5. Verfahren nach einem der Ansprüche 1 bis 4, **dadurch gekennzeichnet, dass** die Eigenschaften des nicht-newtonschen Fluids durch Exposition gegenüber Druck variiert werden, insbesondere wiederholte Exposition gegenüber Druck, und/oder durch Zugabe von Additiven, wie Stearinverbindungen, beispielsweise Stearinsäure, oder Aluminiumstearat.

6. Verfahren zur Herstellung eines Aufprallschutzes, **dadurch gekennzeichnet, dass** mindestens eine Materialschutzschicht unter Verwendung eines nach einem der Ansprüche 1 bis 5 hergestellten, nicht-newtonschen Fluids gebildet wird.

7. Verfahren nach Anspruch 6, wobei das Ausgangsmaterial, das quervernetzt werden kann, um das nicht-newtonsche Fluid zu bilden, mindestens teilweise eine Funktionalisierung umfasst, insbesondere eine oder mehrere Vinylgruppe(n), **dadurch gekennzeichnet, dass** das Ausgangsmaterial mittels dieser Funktionalisierung in ein Klebemittel eingeführt wird.

8. Verfahren nach Anspruch 7, **dadurch gekennzeichnet, dass** das Klebemittel, dass das nicht-newtonsche Fluid enthält auf eine kratzfeste Schicht aufgebracht wird, die selbstheilend ist und/oder insbesondere in Form einer kratzfesten Folie oder in Form einer anfänglich flüssigen und anschließend härtenden, kratzfesten Schicht vorliegt.

9. Verfahren nach Anspruch 8, **dadurch gekennzeichnet, dass** das nicht-newtonsche Fluid in eine Kunststoffschale eingeführt wird.

10. Verfahren nach Anspruch 9, **dadurch gekennzeichnet, dass** das Einführen in die Kunststoffschale umfasst:
Aufbringen einer Schicht der Mischung aus Ausgangsmaterial, Lösungsmittel und Quervernetzungsmittel auf eine erste Kunststofffolie,
Aufbringen einer zweiten Kunststofffolie auf die Schicht vor oder nach der Extraktion des Lösungsmittels aus der Mischung und
Verschließen, insbesondere Verschweißen, der beiden Kunststofffolien.

11. Klebemittelformulierung, die ein nicht-newtonsches Fluid enthält, das nach einem der Ansprüche 1 bis 5 hergestellt wurde, **dadurch gekennzeichnet, dass** das Ausgangsmaterial, das quervernetzt werden kann, um das nicht-newtonsche Fluid zu bilden, mindestens teilweise als Funktionalisierung eine oder mehrere Vinylgruppe/n umfasst, und mittels dieser Funktionalisierung in eine Klebemittelformulierung eingeführt wird.

12. Materialschicht (10), die geeignet ist, jegliche Objekte oder Schichten oder Körperteile, die darunter angeordnet sind, vor Schaden oder Verletzungen durch Aufprall zu schützen (Aufprallschutz), insbesondere für berührungsempfindliche Bildschirme, Schutzwesten, Schutzverglasungen und dergleichen, umfassend eine Klebemittelformulierung nach Anspruch 11.

13. Materialschicht (10) nach Anspruch 12, **dadurch gekennzeichnet, dass** sie eine Kunststoffschale (12) umfasst, in die das nicht-newtonsche Fluid (14) eingeführt wird.

14. Materialschicht (10) nach Anspruch 12 oder 13, **dadurch gekennzeichnet, dass** der Aufprallschutz eine Dicke im Bereich von 50 µm bis 1 mm aufweist, insbesondere von 100 µm bis 500 µm, bevorzugt von 150 µm bis 300 µm.

15. Materialschicht nach einem der Ansprüche 12 bis 14, wobei der Aufprallschutz eine kratzfeste Schicht (20) auf der im bestimmungsgemäßen Montagezustand von dem zu schützenden Objekt (16) abgewandten Seite, die bevorzugt selbstheilend ist und/oder eine Klebstoffschicht auf der im bestimmungsgemäßen Montagezustand von dem zu schützenden Objekt (16) zugewandten Seite umfasst, insbesondere eine Schicht aus einem Haftklebstoff, wobei die Klebstoffschicht bevorzugt eine "One-Touch"-Wirkung zeigt.

16. Materialschicht nach einem der Ansprüche 12 bis 15, **dadurch gekennzeichnet, dass** sie mehrere Aufprallschutzschichten aus nichtnewtonschem Fluid umfasst, wobei jede solcher Schichten unterschiedliche oder die gleichen Aufprallschutz-Eigenschaften aufweist.

17. Objekt mit mindestens einer Materialschicht nach einem der Ansprüche 12 bis 16.

## Revendications

1. Procédé de production d'un fluide non Newtonien en particulier pour une protection contre les chocs, comprenant le fait :
de fournir au moins un polyorganosiloxane non réticulé ou partiellement réticulé comme matériau de départ qui peut être réticulé pour former le fluide non Newtonien,
de fournir de l'éthanol ou du méthanol comme solvant dans lequel est dissous un composé de bore en tant qu'agent de réticulation pour réticuler le matériau de départ, où le solvant a un effet inhibiteur sur la réticulation du matériau de départ,
de mélanger le matériau de départ et le solvant, dans lequel est dissous l'agent de réticulation, et
d'éliminer le solvant du mélange et de libérer ainsi l'agent de réticulation dans le mélange et de réticuler le matériau de départ au moyen de l'agent de réticulation pour former le fluide non Newtonien.

2. Procédé selon la revendication 1, **caractérisé en ce que** le matériau de départ est un polydiméthylsiloxane.

3. Procédé selon l'une quelconque des revendications 1 et 2, **caractérisé en ce que** l'agent de réticulation est l'acide borique.

4. Procédé selon l'une quelconque des revendications 1 à 3, **caractérisé en ce que** les propriétés du fluide non Newtonien sont ajustées par ajustement du poids moléculaire du matériau de départ avant ou après l'extraction du solvant et/ou par ajustement du degré de réticulation.

5. Procédé selon l'une quelconque des revendications 1 à 4, **caractérisé en ce que** les propriétés du fluide non Newtonien sont modifiées par exposition à une pression, en particulier par exposition répétée à une pression et/ou par ajout d'additifs tels que des composés stéariques, par exemple l'acide stéarique ou le stéarate d'aluminium.

6. Procédé de production d'une protection contre les chocs, **caractérisé en ce qu'**au moins une couche de protection de matériau est formée en utilisant un fluide non Newtonien produit selon l'une quelconque des revendications 1 à 5.

7. Procédé selon la revendication 6, dans lequel le matériau de départ qui peut être réticulé pour former le fluide non Newtonien comprend au moins en partie, une fonctionnalisation, en particulier un ou plusieurs groupes vinyle, **caractérisé en ce que** le matériau de départ est introduit dans un adhésif au moyen de cette fonctionnalisation.

8. Procédé selon la revendication 7, **caractérisé en ce que** l'adhésif contenant le fluide non Newtonien est appliqué à une couche résistant aux rayures qui est autoréparable et/ou en particulier se présente sous la forme d'un film résistant aux rayures ou sous la forme d'une couche résistant aux rayures initialement liquide et ensuite durcissable.

9. Procédé selon la revendication 8, **caractérisé en ce que** le fluide non Newtonien est introduit dans une enveloppe en plastique.

10. Procédé selon la revendication 9, **caractérisé en ce que** l'introduction dans l'enveloppe en plastique comprend .
l'application d'une couche du mélange du matériau de départ, du solvant et de l'agent de réticulation sur un premier film en plastique,
l'application d'un deuxième film en plastique sur la couche avant ou après l'extraction du solvant du mélange et
la fermeture, en particulier le soudage, des deux films en plastique.

11. Formulation adhésive, qui contient un fluide non Newtonien produit selon l'une quelconque des revendications 1 à 5, **caractérisée en ce que** le matériau de départ qui peut être réticulé pour former le fluide non Newtonien comprend au moins en partie, comme fonctionnalisation, un ou plusieurs groupe (s) vinyle, et est introduit dans une formulation adhésive au moyen de cette fonctionnalisation.

12. Couche de matériau (10) appropriée pour protéger des objets ou couches ou parties de corps quelconques sous-jacents/sous-jacentes des dommages ou des blessures par chocs (protection contre les chocs), en particulier pour des écrans tactiles, des gilets de protection, des vitrages de protection et autres analogues, comprenant une formulation adhésive selon la revendication 11.

13. Couche de matériau (10) selon la revendication 12, **caractérisée en ce qu'**elle comprend une enveloppe en plastique (12), dans laquelle le fluide non Newtonien (14) est introduit.

14. Couche de matériau (10) selon la revendication 12 ou 13, **caractérisée en ce que** la protection contre les chocs a une épaisseur se trouvant dans la plage allant de 50 µm à 1 mm, en particulier allant de 100 µm à 500 µm, de préférence allant de 150 µm à 300 µm.

15. Couche de matériau selon l'une quelconque des revendications 12 à 14, dans laquelle la protection contre les chocs comprend une couche résistant aux rayures (20) sur le côté opposé à l'objet (16) à protéger lorsqu'elle est montée comme prescrit, qui est de préférence autoréparable et/ou une couche adhésive sur le côté dirigé vers l'objet (16) à protéger lorsqu'elle est montée comme prescrit, en particulier une couche d'un adhésif sensible à la pression, où la couche adhésive présente de préférence un effet tactile.

16. Couche de matériau selon l'une quelconque des revendications 12 à 15, **caractérisée en ce qu'**elle comprend plusieurs couches de protection contre les chocs constituées d'un fluide non Newtonien, chacune de ces couches présentant des propriétés de protection contre les chocs identiques ou différentes.

17. Objet ayant au moins une couche de matériau selon l'une quelconque des revendications 12 à 16.
